# EUROPEAN PATENT SPECIFICATION

(11) **EP 1 504 626 B1**
(45) Date of publication and mention of the grant of the patent: **14.07.2010**
(21) Application number: 03727339.8
(22) Date of filing: 18.04.2003
(51) Int. Cl.: H04W 48/08, H04W 48/16, H04W 88/06

(54) **A WIRELESS COMMUNICATION SYSTEM A WIRELESS COMMUNICATION DEVICE AND METHOD OF MONITORING THEREFOR**
DRAHTLOSES KOMMUNIKATIONSSYTEM, DRAHTLOSES KOMMUNIKATIONSENDGERÄT UND ÜBERWACHUNGSVERFAHREN DAFÜR
SYSTEME ET DISPOSITIF DE COMMUNICATION SANS FIL, ET PROCEDE DE SURVEILLANCE ASSOCIE

(30) Priority: 04.05.2002 GB 0210283
(43) Date of publication of application: 09.02.2005
(73) Proprietor: MOTOROLA, INC., Schaumburg, IL 60196 (US)
(72) Inventor: MCDONALD, Paul, Wroughton, Hampshire SN4 9LJ (GB)
(74) Representative: Jepsen, René Pihl
(86) International application number: PCT/EP2003/004189
(87) International publication number: WO 2003/094559

(56) References cited:
- EP-A- 1 202 593
- WO-A-98/27766
- GB-A- 2 294 844
- US-A- 5 613 204

## Description

### Field of the Invention

This invention relates to a wireless communication system, a wireless communication device and method of monitoring therefor and in particular to cellular communication system and method of monitoring different communication subsystems.

### Background of the Invention

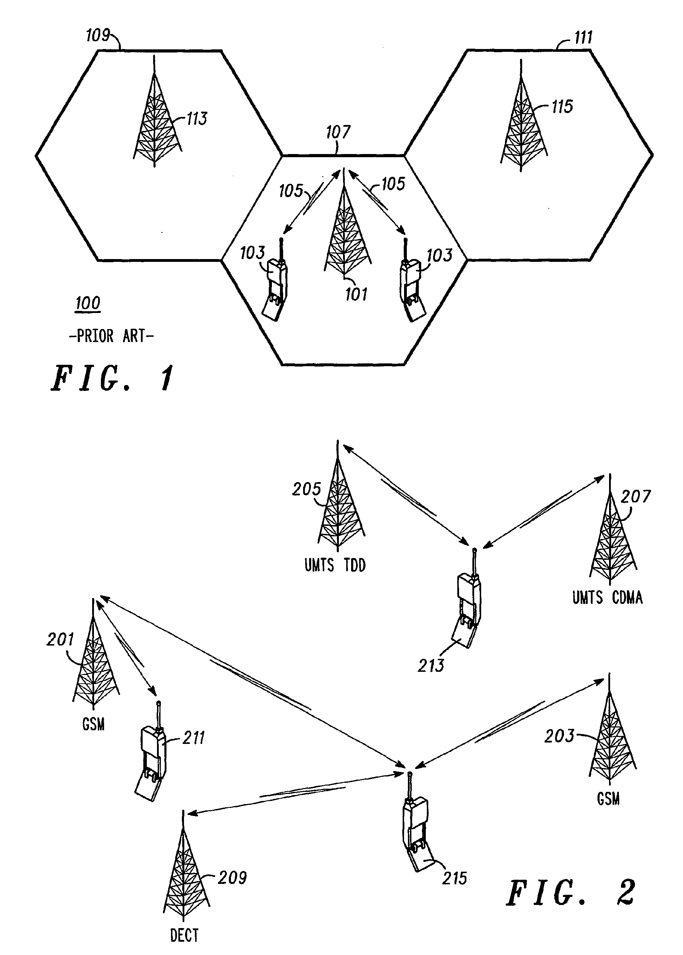

In a cellular communication system, each of the subscriber units (typically mobile stations, communication terminals, wireless devices, user equipment, remote terminals etc) communicates with a fixed base station. Communication from the subscriber unit to the base station is known as uplink, and communication from the base station to the subscriber unit is known as downlink. The total coverage area of the system is divided into a number of separate areas or cells, each predominantly covered by a single base station. The cells are typically geographically distinct with an overlapping coverage area with neighbouring cells. FIG. 1 illustrates a cellular communication system 100. In the system, a base station 101 communicates with a number of subscriber units 103 over radio channels 105. In the cellular system, the base station 101 covers users within a certain geographical area 107, whereas other geographical areas 109, 111 are covered by other base stations 113, 115. Some overlap areas 117 can be covered by more than one cell.

As a subscriber unit moves from the coverage area of one cell to the coverage area of another cell, the communication link will change from being between the subscriber unit and the base station of the first cell, to being between the subscriber unit and the base station of the second cell. This is known as a handover. Specifically, some cells may lie completely within the coverage of other larger cells.

All base stations are interconnected by a fixed network. This fixed network comprises communication lines, switches, interfaces to other communication networks and various controllers required for operating the network. A call from a subscriber unit is routed through the fixed network to the destination specific for this call. If the call is between two subscriber units of the same communication system, the call will be routed through the fixed network to the base station of the cell in which the other subscriber unit currently is. A connection is thus established between the two serving cells through the fixed network. Alternatively, if the call is between a subscriber unit and a telephone connected to the Public Switched Telephone Network (PSTN) the call is routed from the serving base station to the interface between the cellular mobile communication system and the PSTN. It is then routed from the interface to the telephone by the PSTN. A similar procedure is used for other public or private networks.

A cellular mobile communication system is allocated a frequency spectrum for the radio communication between the subscriber units and the base stations. This spectrum must be shared between all subscriber units simultaneously using the system.

One method of sharing this spectrum is by a technique known as Time Division Multiple Access (TDMA). In a TDMA communication system, the frequency spectrum is typically divided into a number of separate frequency channels or carriers and for each of these carriers a plurality of subscriber units are served by being allocated distinct time intervals. Thus in the example of the TDMA communication system GSM, the frequency spectrum is divided into 200 kHz frequency channels each of which is divided into eight separate time slots. A subscriber unit is allocated a specific time slot on a given frequency channel for communication with the serving base station. Further details of GSM can be found in' The GSM System for Mobile Communications', Bay Foreign Language Books, authors Michel Mouly and Marie-Bernadette Pautet, 1992, ISBN 2950719007.

Another method of sharing cellular spectrum is by a technique known as Code Division Multiple Access (CDMA). In a Direct Sequence CDMA (DS-CDMA) communication system, the signals are multiplied by a high rate code whereby the signal is spread over a larger frequency spectrum. A narrowband signal is thus spread and transmitted as a wideband signal. At the receiver, the original narrowband signal is regenerated by multiplication of the received signal with the same code used to spread the signal in the transmitter. A signal which has been spread by use of a different code will not be despread by the receiver but will remain a wide band signal. It will then be removed by filtering after the de-spreading operation. In the receiver, the majority of interference from signals in the same frequency spectrum as the wanted signal can thus be removed by filtering. Consequently, a plurality of subscriber units can be accommodated in the same wideband spectrum by allocating different codes for different subscriber units. Codes are chosen to minimise the interference caused between subscriber units typically by choosing orthogonal codes when possible. A further description of CDMA communication systems can be found in 'Spread Spectrum CDMA Systems for Wireless Communications', Glisic & Vucetic, Artech house Publishers, 1997, ISBN 0-89006-858-5. Examples of CDMA cellular communication systems are IS 95 and the Universal Mobile Telecommunication System (UMTS).

Currently an increasing number of wireless communication systems accessible by a remote terminal or subscriber unit are becoming available. The service, cost and accessibility of these communication systems vary and in order for a subscriber unit to use the most suitable communication system in a given situation, subscriber units are developed which can operate on a variety of communication systems. As such, current GSM mobiles are developed which can potentially use different communication systems such as GSM 900, GSM 1800, GSM 1900 and DECT. A subscriber unit equipped to use all of these communication systems will ideally monitor all these subsystems and select the communication system best suited for the current requirements of the subscriber unit in the current conditions.

Even more complex subscriber units are planned that will be capable of using an even wider variety and number of communication systems. Thus it is envisaged that software definable radios will soon be available which are capable of using all or the majority of the following communication systems:
- GSM 900
- GSM 1800
- GSM 1900
- UMTS 1800
- UMTS FDD
- UMTSTDD
- UMTS TD-SCDMA
- IS95
- CDMA2000
- TDMA
- BRAN
- WLL
- Bluetooth
- DECT
- Fixed access (PSTN, LAN)
- IEEE802.11a
- IEEE802.11b

To a subscriber unit capable of using a plurality of communication systems, the individual wireless communication systems thus become subsystems in a larger overlaying communication system comprised by the aggregation of communication systems available to a subscriber unit.

However, in order for the subscriber unit to determine which subsystem is the optimal communication system, it is required that it scans and monitors a plurality of the subsystems. Even for the relevant and simple GSM subscriber unit currently on the market this is a complex and time and resource-demanding task. The complexity of this task is increased as the different mixes of what systems and services are available to the users may vary significantly between different regions.

As example of associated technology GB-A-2 294 844 describes providing information regarding the availability of communication systems in the coverage area of a subscriber unit, EP-A-1 202 593 describes obtaining monitoring information from a terminal, US-A-5 613 204 describes a roaming subscriber unit that identifies available service providers in its area, and WO 98/27766 A describes searching for available networks according to local availability information.

The problem is significantly exacerbated when a multitude of very different communication subsystems having very different radio access technologies are used. Monitoring and scanning different subsystems will involve significant re-configuration of the radio subsystem of the subscriber unit (assuming a single radio subsystem, not parallel radios which would significantly increase complexity and cost), and synchronisation with the new network technologies flame and broadcast schedules. This complexity will make scanning slow and could interfere with currently active communications from that terminal. The slowness of scanning could also delay handover of calls between network types and result in dropped calls. In addition, the monitoring would require complex algorithms and therefore increase the resource requirement and reduce battery life of the subscriber unit.

Hence, the current schemes for monitoring different communication systems are complex, slow and very resource demanding and there is thus a need for an improved system monitoring communication systems by a subscriber unit.

### Summary of the Invention

The inventors of the current invention have realised that conventional approaches for monitoring communication systems are suboptimal and can be improved. The invention seeks to provide an improvement in the monitoring of a plurality of communication systems and specifically it seeks to improve the time, resource and complexity required for monitoring of a plurality of communication systems.

Accordingly there is provided a wireless communication system in accordance with claim 1, a wireless communication system in accordance with claim 12, and a method of monitoring in a wireless communication system in accordance with claim 16.

### Brief Description of the Drawings

An embodiment of the present invention is described below, by way of example only, with reference to the Drawings, in which:
FIG. 1 is an illustration of a cellular communication system according to prior art;
FIG. 2 is an illustration of a communication system in accordance with an embodiment of the invention;
FIG. 3 illustrates a communication system where the communication subsystems are used to distribute monitoring information in accordance with a different embodiment of the invention;
FIG. 4 illustrates a communication system with central combination of monitoring information in accordance with an embodiment of the invention; and
FIG. 5 illustrates a communication system with distributed combination of monitoring information in accordance with an embodiment of the invention.

### Detailed Description of a Preferred Embodiment

FIG. 2 is an illustration of a communication system in accordance with an embodiment of the invention.

In the described embodiment, well-known individual communication systems GSM, UMTS TDD (Time Division Duplex), UMTS CDMA (Code Division Multiple Access) and DECT can be accessed by a group of subscriber units. Each individual subscriber unit within the group may be able to access one, more or all of the available communication systems. Thus a communication system is formed comprising the group of subscriber units and the individual communication systems as communication subsystems. The individual communication systems (i.e. the subsystems) are in the preferred embodiment coordinated and can share subscriber unit information through suitable network interfaces. In the preferred embodiment, the individual communication systems are also capable of interworking such that call data can be routed from one system to the other, thereby allowing in call handover from one subsystem to the other. However, in other communication systems the subsystems are completely independent and share no information or infrastructure. In this case, it is the capability of the group of mobiles as a whole which define which individual communication systems are subsystems of the communication system. Hence, the individual communication systems may be operated by different operators which may operate their system completely independently and without consideration of any other communication systems, but are preferably coordinating and exchanging information with the other individual communication systems forming the sub-communication systems.

FIG. 2 shows a number of base stations of the communication system 201, 203, 205, 207, 209 in a given area. Two of the base stations 201, 203 belong to the GSM communication subsystem, one base station 205 belongs to the UMTS TDD communication subsystem, one base station 207 belongs to the UMTS CDMA communication subsystem and the last base station 209 belongs to the UMTS TDD communication subsystem. FIG. 2 further shows a group of three subscriber units 211, 213, 215 currently within the given region. The group of subscriber units thus may potentially access four subsystems (i.e. one of the four individual communication systems). In order to determine which communication subsystem to use or access, each subscriber unit must determine information relating to each of the communication subsystems it is capable of using.

Hence, if a first subscriber unit 213 is able to communicate on the UMTS TDD, UMTS CDMA and GSM communication subsystems, it must determine information relating to these three communication systems. The information is typically determined by monitoring the prevailing radio conditions for the communication systems such as pilot signal levels, signal level etc or receiving information broadcast by the different communication systems and relating to characteristics of the communication system. However, the monitoring may include any suitable information including for example available capacity or synchronisation information.

In accordance with the described embodiment, a first subscriber unit 213 monitors a subset of the communication subsystems. In the example of FIG 2, the first subscriber unit 213 monitors two communication subsystems UMTS TDD and UMTS CDMA. This monitoring specifically includes measuring the received pilot signal level of the base stations 205, 207 of the two communication systems UMTS TDD and UMTS CDMA. The monitoring by the subscriber units is not necessarily limited to the base stations in the given region but may well include base stations of the relevant communication systems in other regions.

Further in accordance with the described embodiment, a second subscriber unit 215, capable of communicating on all of the four communication subsystems, monitors a second subset of the communication subsystems comprising the GSM communication subsystem and the DECT communication subsystem. Specifically, the second subscriber unit 215 measures the received pilot signal level from the GSM base stations 201, 203 and the DECT base station 209. The monitoring subsets may be completely different or overlapping. Some subscriber units within the group may have identical monitoring subsets but at least two subscriber units out of the group of subscriber units will have different monitoring subsets.

In accordance with an embodiment of the invention, the monitoring information generated by the first subscriber unit is communicated to the other subscriber units 211, 215 in the group. Likewise, the monitoring information generated by the second subscriber unit 215 is communicated to the other subscriber units 211, 213. Furthermore, any monitoring information generated by other subscriber units 211 is communicated to other subscriber units 213, 215. The monitoring information from the different subscriber units 211, 213, 215 is then combined to generate combined monitoring information relating to more of the communication subsystems than those monitored by some or all of the subscriber units 211, 213, 215.

The combination of monitoring information can be achieved in different ways. In the preferred embodiment, the combination is performed in the subscriber unit. Thus the second subscriber unit 215 will receive monitoring information from the first subscriber unit 213 and will combine the information on the UMTS TDD and CDMA communication subsystems with the information it itself generated for the GSM and DECT communication systems. Hence, by combining this information, it will generate combined monitoring information related to all the available communication systems. Furthermore, monitoring information relating to a given characteristic of a given communication system can be received from a plurality of subscriber units (or can be generated locally and received from other subscriber units) and this information can be combined such that the combined information considers information received from all sources. The combination may for example be performed by averaging of the received values.

In the example of the monitoring information being pilot signal levels, the measured signal levels of another subscriber unit 213 are considered as an indication of the pilot signal level that would be received at the second subscriber unit 215. As the subscriber units 213, 215 are located relatively close to each other, an assumption that the levels will be identical or similar is reasonable but any known method of estimating radio characteristics of a subscriber unit from that received at a different subscriber unit may be used without detracting from the current invention.

If the monitoring information relates to characteristics of the communication subsystem that are independent of the radio characteristics from a base station to a subscriber unit, the monitoring information can typically be used directly. For example, if the monitoring information measured by the first subscriber unit 213 relates to the available capacity or tariff for a specific service on the UMTS TDD communication subsystem this information will be equally applicable to the second subscriber unit 215. Other examples of monitoring information which is relevant for handover or access to the communication subsystems and can be used by subscriber units not having themselves determined the information include the identity of the network operator, the frequencies or codes employed, the broadcast configuration of the network, and synchronisation information.

Thus in accordance with the embodiment of the invention, the monitoring of a plurality of communication subsystems is distributed between a plurality of subscriber units and the information is shared between these. Consequently, an individual subscriber unit need only monitor a small subset of the possible communication subsystems, yet is made aware of the capabilities of all subsystems in its neighbourhood, including those it did not directly monitor itself. This significantly reduces the resource and time required by the individual subscriber unit to monitor a plurality of systems and thereby speeds up access and handovers while reducing the complexity and battery drain of the subscriber unit.

The monitoring information generated by subscriber units can be distributed to other subscriber units in different ways. In the preferred embodiment, where the combining of monitoring information is performed in the subscriber unit, the monitoring information is preferably communicated directly between the subscriber units without using the communication subsystems for the communication. In one embodiment a direct wireless link is formed between the subscriber units such that the subscriber units communicate directly without any intermediate. In another embodiment the subscriber units communicate a short range ad-hoc network. Specifically, the ad-hoc network can be a standardised network for short range device to device communication, such as IEEE 802.11a or b currently standardised for short range ad-hoc wireless networks. In other embodiments the link may be formed by a wireless Local Area Network (LAN). In yet another embodiment the link may be formed by a Bluetooth link, which provides the advantage that a link is automatically and dynamically formed to subscriber units in close proximity using low cost standardised communication means.

In the specific embodiments wherein a link is formed between subscriber units without using the communication subsystems for the communication, there is no additional loading of the communication subsystems. Furthermore, as any suitable link can be used, it is not required that the communication subsystems are suitable or capable of distributing the monitoring information. This is specifically advantageous for completely separate and independent communication subsystems as there is no requirement for any coordination or exchange of monitoring information through the individual and independent communication subsystems. Thus an individual communication subsystem may be included in the communication system independently of the operators knowledge, as all that is required is that a group of subscriber units are capable of monitoring different subsets of communication systems and sharing the information. Specific use of ad-hoc networks provide the advantage that suitable links between subscriber units can dynamically and automatically be formed to suit the current distribution and locations of subscriber units.

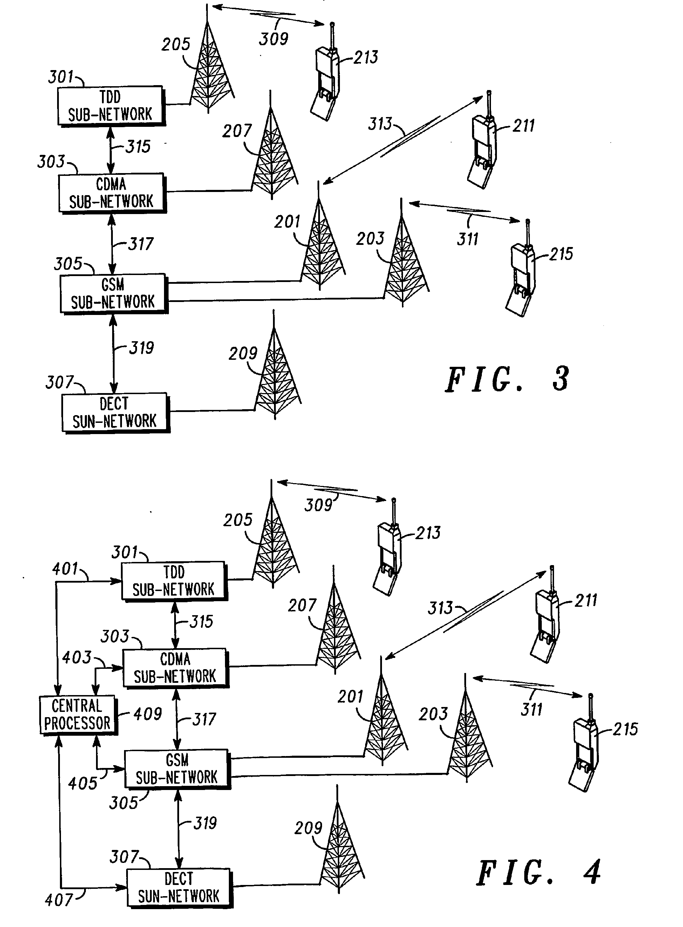

FIG. 3 illustrates a communication system where the communication subsystems are used to distribute monitoring information in accordance with a different embodiment of the invention.

FIG. 3 shows the base stations 201, 203, 205, 207, 209 and the subscriber units 211, 213, 215 of FIG. 2. In addition FIG 3 shows the UMTS TDD base station 205 connected to a UMTS TDD fixed sub-network 301, the UMTS CDMA base station 207 connected to a UMTS CDMA fixed sub-network 303, the GSM base stations 201, 203 connected to a GSM fixed sub-network 305 and the DECT base station 209 connected to a DECT fixed sub-network 307. The fixed network of the communication system is thus made up by the combination of the fixed sub-networks of the individual communication systems i.e. the communication subsystems.

The first subscriber unit 213 determines monitoring information as previously described. The determined monitoring information is subsequently communicated to the base station serving the subscriber unit 213. In the example of FIG. 3, the subscriber unit is currently in the TDD mode and is served by the TDD base station 205 over a TDD communication link 309. The subscriber unit 213 communicates the monitoring information to the UMTS TDD base station 205 through this TDD link 309. The base station 205 communicates the received monitoring information to the UMTS TDD fixed sub-network 301. Likewise other subscriber units communicate monitoring information determined by them to the fixed network through a suitable link, which is preferably a serving link. Thus, the second subscriber unit 215 communicates the monitoring information to the GSM fixed sub-network 305 through the serving GSM base station 203 using the serving link 311, and the third subscriber unit 211 communicates the monitoring information to the GSM fixed sub-network 305 through the serving GSM base station 201 using the serving link 313.

The fixed sub-networks 301, 303, 305, 307 are interconnected by communication links 315, 317, 319 and the received monitoring information is communicated between all the fixed sub-networks 301, 303. 305, 307 such that each of the fixed sub-networks 301, 303, 305, 307 have all the monitoring information generated by any of the subscriber units 211, 213, 215. The total information is then broadcast on all the communication subsystems so that all subscriber units in the group receive all the monitoring information determined. The subscriber units can upon receiving the total monitoring information process combine the information as required. For example, if monitoring information relevant to a specific communication subsystem is received from a plurality of subscriber units, the information may be broadcast unmodified and the subscriber unit may combine it, e.g. by averaging of the values. Thus, in this embodiment, the combining of the first and second monitoring information is performed partly in the fixed network and partly in the subscriber unit.

FIG. 4 illustrates a communication system with central combination of monitoring information in accordance with an embodiment of the invention. In this embodiment, all fixed sub-networks 301, 303, 305, 307 are connected by communication links 401, 403, 405, 407 to a central processor 409 for combining the monitoring information. Thus the central processor 409 for combining the monitoring information. Thus the central processor 409 receives the monitoring information from all subscriber units 211, 213, 215 and combines the information into a single monitoring information set. Preferably the single combined monitoring information set comprises information from all subscriber units and relates to all communication subsystems. However, the single monitoring information set may only comprise monitoring information from a subset of subscriber units or relate to a subset of the communication subsystems, for example dependent on the current capability of the subscriber units included in the monitoring group. The monitoring information set is communicated to all of the communication subsystems, which broadcast the information. Consequently, each of the subscriber units 211, 213, 215 can receive the combined information relating to all communication subsystems simply by receiving the broadcast channel of the preferred communication subsystem. Further, there is no requirement for the individual subscriber units 211, 213, 215 to process any information, as this has already been done centrally by the central processor 409.

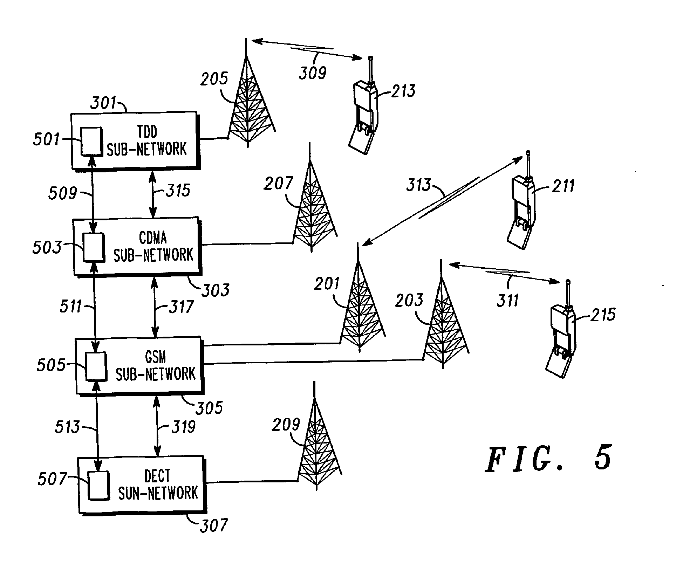

FIG. 5 illustrates a communication system with distributed combination of monitoring information in accordance with an embodiment of the invention. In this embodiment all fixed sub-networks 301, 303, 305, 307 comprise a combining processor 501, 503, 505, 507 and the combining processors are directly interconnected by communication links 509, 511, 513. Each of the combining processors 501,503, 505, 507 is capable of receiving monitoring information from and transmitting monitoring information to other combining processors 501, 503, 505, 507. Thus a combining processor 501, 503, 505, 507 will store the monitoring information reported from subscriber units to the communication subsystem of the combining processor 501, 503, 505, 507 and communicate it to other combining processors 501, 503, 505, 507. In addition it will receive the monitoring information reported by subscriber units 211, 213, 215 on other communication subsystems from their respective combining processor 501, 503, 505, 507. Each combining processor 501, 503, 505, 507 will thus accumulate all the monitoring information reported on any of the communication subsystems. It will further combine the monitoring information to generate a combined monitoring information set, which it will broadcast on the associated communication subsystem.

In accordance with one embodiment of the invention, the monitoring information comprises information related to the location of the subscriber unit when the monitoring information was generated. Thus the monitoring information subsets communicated by subscriber units are transmitted together with information relating to the location of the originating subscriber unit when it monitored the communication systems. Individual location information for each individual piece of monitoring information may be used or a single location tag for the entire communicated monitoring information subset can be used. A subscriber unit receiving a monitoring information subset can in this embodiment determine how close it is to the location where the monitoring information was generated and therefrom determine how relevant the information is to the subscriber unit. Thus a receiving subscriber unit may only use monitoring information that was generated within a certain distance of the current location of the subscriber unit. Further the location information can be used to discard or accept received monitoring information dynamically as the subscriber unit moves. Any known method of determining location of a subscriber unit can be used without detracting from the invention.

In accordance with one embodiment of the invention, the monitoring information comprises information related to the time of generation of the monitoring information. Thus the monitoring information subsets communicated by subscriber units are transmitted together with information relating to the time at which the originating subscriber unit monitored the communication systems. Individual time information for each individual piece of monitoring information may be used or a single time tag for the entire communicated monitoring information subset can be used. A subscriber unit receiving a monitoring information subset can in this embodiment determine how much time has elapsed since the monitoring was performed and thus how relevant it is to the subscriber unit. In one embodiment, the time information is in the form of an expiry time which is added to the monitoring information subset and indicates a time instant up to which the information may be considered valid.

The components and functionality described may be implemented in any suitable manner to provide suitable apparatus. Specifically, the components may consist of a single discrete entity, or may alternatively be formed by adapting existing parts or components. As such the required adaptation may be implemented in the form of processor-implementable instructions stored on a storage medium, such as a floppy disk, hard disk, PROM, RAM or any combination of these or other storage media Furthermore, the functionality may be implemented in the form of hardware, firmware, software, or any combination of these. Specifically, the subscriber units operable to monitor and/ or access a plurality of communication systems may be implemented in any suitable form whether by use of software definable radios, fully parallel subscriber units having independent circuitry for each individual communication system.

It will be understood that the invention tends to provide the following advantages singly or in any combination:
- it provides for low complexity subscriber units operable on a plurality of individual communication systems.
- it significantly reduces time required by the individual subscriber unit to monitor a plurality of systems and thereby speeds up access and handovers.

## Claims

1. A wireless communication system (100) having a plurality of communication subsystems serving a plurality of subscriber units **characterized by** comprising
a first subscriber unit (213) arranged to monitor a first subset of the plurality of communication subsystems thereby generating a first monitoring information subset relevant to the first subset of communication systems;
a second subscriber unit (215) arranged to monitor a second subset of the plurality of communication subsystems different from the first subset of communication subsystems thereby generating a second monitoring information subset relevant to the second subset of communication systems; and
means (301, 303, 305, 307, 211, 213, 215, 409, 501, 503, 505, 507) for combining the first and second monitoring information subsets into a combined monitoring information set relevant to communication subsystems of both the first and second subset of communication subsystems including means arranged to obtain the first and second monitoring information subset and means arranged to communicate the combined monitoring information set, and
wherein the first and second subscriber units include means for communicating with the communication subsystems of its own subset and at least one communication subsystem of the other subset, means for communicating its generated monitoring information subset, and means for obtaining the combined monitoring information set.

2. A wireless communication system as claimed in claim 1 wherein the means for combining is in the second subscriber unit (215) and the communication system comprises means (301, 303, 305, 307) for communicating the first monitoring information subset from the first subscriber unit (213) to the second subscriber unit (215).

3. A wireless communication system as claimed in claim 2 wherein the means for communicating the first monitoring information subset includes a direct wireless link from the first (213) to the second subscriber unit (215).

4. A wireless communication system as claimed in claim 2 wherein the means for communicating the first monitoring information subset comprises a short range ad hoc network.

5. A wireless communication system as claimed in claim 2 wherein the means for communicating the first monitoring information subset comprises a wireless Bluetooth connection.

6. A wireless communication system as claimed in claim 1 wherein means for combining (301, 303, 305, 307) is in a fixed network of the communication system and the communication system comprises means (205, 309) for communicating the first monitoring information subset from the first subscriber unit (213) to fixed network (301) and means (311, 203) for communicating the second monitoring information subset from the second subscriber unit (215) to fixed network (305) and means for communication (301 205) the combined monitoring information set to the first subscriber unit.

7. A wireless communication system as claimed in claim 6 further comprising means for broadcasting the combined monitoring information subset to a plurality of subscriber units (211, 213, 215).

8. A wireless communication system as claimed in claim 7 means for broadcasting are arranged to broadcast the combined monitoring information subset on a broadcast plurality of communication subsystems.

9. A wireless communication system as claimed in any previous claim wherein the first and second monitoring information comprises information related to the location of the associated first and second subscriber unit (213, 215) when the monitoring information was generated.

10. A wireless communication system as claimed in claim 1 wherein the first and second monitoring information comprises information related to the time of generation of the monitoring information.

11. A wireless communication system as claimed in claim 1 wherein each communication subsystem comprises a fixed sub-network (301, 303, 305, 307) and wherein a plurality of means for combining is distributed between the fixed sub-networks (301, 303, 305, 307).

12. A wireless communication device for a communication system having a plurality of communication subsystems serving a plurality of subscriber units (211, 213, 215) **characterized by** comprising:
a first subscriber unit (213) arranged to monitor a first subset (301) of the plurality of communication subsystems thereby generating a first monitoring information subset relevant to the first subset of communication systems, and comprising means for communicating with the first subset of the plurality of communication subsystems and at least one communication subsystem of a second subset of the plurality of communication subsystems
means for receiving (203) a second monitoring information subset relevant to the second subset (305) of communication systems generated by a second subscriber unit (215) arranged to monitor the second subset (305) of the plurality of communication subsystems which is different from the first subset (301) of communication subsystems; and
means for combining (301, 303, 305, 307, 211, 213, 215, 409, 501, 503, 505, 507) the first and second monitoring information subsets into a combined monitoring information set relevant to communication subsystems of both the first and second subset of communication subsystems; and
means for communicating the combined monitoring information set to other subscriber units (211, 215).

13. A wireless communication device as claimed in claim 12 wherein the means for receiving (203) the second monitoring information subset are operable to receive the second monitoring information subset from a direct wireless link from the second (215) to the first subscriber unit (213).

14. A wireless communication device as claimed in claim 12 wherein the means for receiving (203) the second monitoring information subset are operable to receive the second monitoring information subset from a short range ad hoc network.

15. A wireless communication device as claimed in claim 12 wherein the means for receiving (203) the second monitoring information subset are operable to receive the second monitoring information subset from a Bluetooth connection.

16. A method of monitoring in a wireless communication system having a plurality of communication subsystems serving a plurality of subscriber units, the method **characterized by** comprising the steps of:
monitoring, in a first subscriber unit, a first subset of the plurality of communication subsystems through communicating with the communication subsystems of the first subset and at least one a second subset of the communication subsystems thereby generating a first monitoring information subset relevant to the first subset of communication systems;
monitoring, in a second subscriber unit, the second subset of the plurality of communication subsystems which is different from the first subset of communication subsystems through communicating with the communication subsystems of the second subset and at least one communication subsystem of the first subset of the communication subsystems thereby generating a second monitoring information subset relevant to the second subset of communication systems;
communicating the generated first and second monitoring information subset;
obtaining the first and second monitoring information subset;
combining the first and second monitoring information subsets into a combined monitoring information set relevant to communication subsystems of both the first and second subset of communication subsystems;
communicating the combined monitoring information set; and
obtaining the combined monitoring information set.

17. A method of monitoring as claimed in claim 16 wherein the step of combining occurs in the second subscriber unit and the first monitoring information subset is communicated from the first subscriber unit to the second communication unit through a direct wireless link from the first to the second subscriber unit.

18. A method of monitoring as claimed in claim 16 wherein the step of combining occurs in the second subscriber unit and the first monitoring information subset is communicated from the first subscriber unit to the second communication unit through a short range ad hoc network.

19. A method of monitoring as claimed in claim 16 wherein the step of combining occurs in the second subscriber unit and the first monitoring information subset is communicated from the first subscriber unit to the second communication unit through a wireless Bluetooth connection.

20. A method of monitoring as claimed in claim 16 wherein the step of combining the first and second monitoring information subset into a combined monitoring information set comprises the steps of:
communicating the first monitoring information subset from the first subscriber unit to fixed network;
communicating the second monitoring information subset from the second subscriber unit to fixed network;
combining the combining the first and second monitoring information subset into a combined monitoring information set in the fixed network; and
communicating the combined monitoring information set to the first subscriber unit.

21. A method of monitoring as claimed in claim 20 wherein the step of communicating the combined monitoring information set comprises the step of broadcasting the combined monitoring information subset to a plurality of subscriber units.

## Patentansprüche

1. Drahtloses Kommunikationssystem (100), das über eine Mehrzahl von Kommunikationsteilsystemen verfügt, die eine Mehrzahl von Teilnehmereinheiten versorgen, **dadurch gekennzeichnet, dass** es umfasst:
eine erste Teilnehmereinheit (213), die angeordnet ist, um eine erste Teilmenge von der Mehrzahl von Kommunikationsteilsystemen zu überwachen, wodurch eine erste Überwachungsinformationsteilmenge erzeugt wird, entsprechend der ersten Teilmenge von Kommunikationssystemen;
eine zweite Teilnehmereinheit (215), die angeordnet ist, um eine zweite Teilmenge von der Mehrzahl von Kommunikationsteilsystemen, die von der ersten Teilmenge von Kommunikationsteilsystemen verschieden ist, zu überwachen, wodurch eine zweite Überwachungsinformationsteilmenge erzeugt wird, entsprechend der zweiten Teilmenge von Kommunikationssystemen; und
Mittel (301, 303, 305, 307, 211, 213, 215, 409, 501, 503, 505, 507) zum Kombinieren der ersten und zweiten Überwachungsinformationsteilmengen zu einem kombinierten Überwachungsinformationssatz, entsprechend Kommunikationsteilsystemen sowohl der ersten als auch der zweiten Teilmenge von Kommunikationsteilsystemen, Mittel umfassend, die angeordnet sind, um die erste und zweite Überwachungsinformationsteilmenge zu erhalten, und Mittel umfassend, die den kombinierten Überwachungsinformationssatz kommunizieren, und
wobei die erste und zweite Teilnehmereinheit umfassen: Mittel zum Kommunizieren mit den Kommunikationsteilsystemen ihrer eigenen Teilmenge und mindestens einem Kommunikationsteilsystem der anderen Teilmenge, Mittel zum Kommunizieren ihrer erzeugten Überwachungsinformationsteilmenge, und Mittel zum Erhalten des kombinierten Überwachungsinformationssatzes.

2. Drahtloses Kommunikationssystem gemäß Anspruch 1, wobei das Mittel zum Kombinieren die zweite Teilnehmereinheit (215) ist und das Kommunikationssystem Mittel (301, 303, 305, 307) zum Kommunizieren der ersten Überwachungsinformationsteilmenge von der ersten Teilnehmereinheit (213) zu der zweiten Teilnehmereinheit (215) umfasst.

3. Drahtloses Kommunikationssystem gemäß Anspruch 2, wobei das Mittel zum Kommunizieren der ersten Überwachungsinformationsteilmenge eine direkte drahtlose Verbindung von der ersten (213) zu der zweiten Teilnehmereinheit (215) umfasst.

4. Drahtloses Kommunikationssystem gemäß Anspruch 2, wobei das Mittel zum Kommunizieren der ersten Überwachungsinformationsteilmenge ein Ad-hoc-Netzwerk mit kurzer Reichweite umfasst.

5. Drahtloses Kommunikationssystem gemäß Anspruch 2, wobei das Mittel zum Kommunizieren der ersten Überwachungsinformationsteilmenge eine drahtlose Bluetooth-Verbindung umfasst.

6. Drahtloses Kommunikationssystem gemäß Anspruch 1, wobei sich Mittel zum Kombinieren (301, 303, 305, 307) in einem festen Netzwerk des Kommunikationssystems befinden und das Kommunikationssystem umfasst: Mittel (205, 309) zum Kommunizieren der ersten Überwachungsinformationsteilmenge von der ersten Teilnehmereinheit (213) zu dem festen Netzwerk (301) und Mittel (311, 203) zum Kommunizieren der zweiten Überwachungsinformationsteilmenge von der zweiten Teilnehmereinheit (215) zu dem festen Netzwerk (305) und Mittel zum Kommunizieren (301, 205) des kombinierten Überwachungsinformationssatzes an die erste Teilnehmereinheit.

7. Drahtloses Kommunikationssystem gemäß Anspruch 6, weiterhin Mittel umfassend zum Übertragen der kombinierten Überwachungsinformationsteilmenge zu einer Mehrzahl von Teilnehmereinheiten (211, 213, 215).

8. Drahtloses Kommunikationssystem gemäß Anspruch 7, wobei Mittel zum Übertragen angeordnet sind, um die kombinierte Überwachungsinformationsteilmenge auf einer Mehrzahl von Übertragungskommunikationsteilsystemen zu übertragen.

9. Drahtloses Kommunikationssystem gemäß einem der vorangehenden Ansprüche, wobei die ersten und zweiten Überwachungsinformationen Informationen bezüglich des Standortes der verknüpften ersten und zweiten Teilnehmereinheit (213, 215), zu der Zeit als die Überwachungsinformationen erzeugt wurden, umfassen.

10. Drahtloses Kommunikationssystem gemäß Anspruch 1, wobei die ersten und zweiten Überwachungsinformationen Informationen bezüglich der Zeit der Erzeugung der Überwachungsinformationen umfassen.

11. Drahtloses Kommunikationssystem gemäß Anspruch 1, wobei jedes Kommunikationsteilsystem ein festes Netzwerk (301, 303, 305, 307) umfasst und eine Mehrzahl von Mitteln zum Kombinieren zwischen den festen Teilnetzwerken (301, 303, 305, 307) verteilt sind.

12. Drahtlose Kommunikationsvorrichtung für ein Kommunikationssystem, das über eine Mehrzahl von Kommunikationsteilsystemen verfügt, die eine Mehrzahl von Teilnehmereinheiten (211, 213, 215) versorgen, **dadurch gekennzeichnet, dass** es umfasst:
eine erste Teilnehmereinheit (213), die angeordnet ist, um eine erste Teilmenge (301) von der Mehrzahl von Kommunikationsteilsystemen zu überwachen, wodurch eine erste Überwachungsinformationsteilmenge erzeugt wird, entsprechend der ersten Teilmenge von Kommunikationssystemen; und Mittel zum Kommunizieren mit der ersten Teilmenge von der Mehrzahl von Kommunikationsteilsystemen und mindestens einem Kommunikationsteilsystem einer zweiten Teilmenge der Mehrzahl von Kommunikationsteilsystemen umfasst.
Mittel zum Empfangen (203) einer zweiten Überwachungsinformationsteilmenge entsprechend der zweiten Teilmenge (305) von Kommunikationssystemen, die durch eine zweite Teilnehmereinheit (215) erzeugt wird, angeordnet, um die zweite Teilmenge (305) von der Mehrzahl von Kommunikationsteilsystemen, die von der ersten Teilmenge (301) von Kommunikationsteilsystemen verschieden ist, zu überwachen; und
Mittel zum Kombinieren (301, 303, 305, 307, 211, 213, 215, 409, 501, 503, 505, 507) der ersten und zweiten Überwachungsinformationsteilmengen zu einem kombinierten Überwachungsinformationssatz entsprechend Kommunikationsteilsystemen sowohl der ersten als auch der zweiten Teilmenge von Kommunikationsteilsystemen; und
Mittel zum Kommunizieren des kombinierten Überwachungsinformationssatzes zu anderen Teilnehmereinheiten (211, 215).

13. Drahtlose Kommunikationsvorrichtung gemäß Anspruch 12, wobei das Mittel zum Empfangen (203) der zweiten Überwachungsinformationsteilmenge betriebsbereit ist, um die zweite Überwachungsinformationsteilmenge von einer direkten drahtlosen Verbindung von der zweiten (215) zu der ersten Teilnehmereinheit (213) zu empfangen.

14. Drahtlose Kommunikationsvorrichtung gemäß Anspruch 12, wobei das Mittel zum Empfangen (203) der zweiten Überwachungsinformationsteilmenge betriebsbereit ist, um die zweite Überwachungsinformationsmenge von einem Ad-hoc-Netzwerk mit kurzer Reichweite zu empfangen.

15. Drahtlose Kommunikationsvorrichtung gemäß Anspruch 12, wobei das Mittel zum Empfangen (203) der zweiten Überwachungsinformationsteilmenge betriebsbereit ist, um die zweite Überwachungsinformationsmenge von einer Bluetooth-Verbindung zu empfangen.

16. Verfahren zum Überwachen in einem drahtlosen Kommunikationssystem, das über eine Mehrzahl von Kommunikationsteilsystemen verfügt, die eine Mehrzahl von Teilnehmereinheiten versorgen, **dadurch gekennzeichnet, dass** es die folgenden Schritte umfasst:
Überwachen, in einer ersten Teilnehmereinheit, einer ersten Teilmenge von Kommunikationsteilsystemen durch Kommunizieren mit den Kommunikationssystemen der ersten Teilmenge und mindestens einem Kommunikationssystem einer zweiten Teilmenge der Kommunikationsteilsysteme, wodurch eine erste Überwachungsinformationsteilmenge entsprechend der ersten Teilmenge von Kommunikationssystemen erzeugt wird;
Überwachen, in einer zweiten Teilnehmereinheit, der zweiten Teilmenge von der Mehrzahl von Kommunikationsteilsystemen, die von der ersten Teilmenge von Kommunikationsteilsystemen verschieden ist, durch Kommunizieren mit den Kommunikationsteilsystemen der zweiten Teilmenge und mindestens einem Kommunikationsteilsystem von der ersten Teilmenge der Kommunikationsteilsysteme, wodurch eine zweite Überwachungsinformationsteilmenge entsprechend der zweiten Teilmenge von Kommunikationssystemen erzeugt wird;
Kommunizieren der erzeugten ersten und zweiten Überwachungsinformationsteilmenge;
Erhalten der ersten und zweiten Überwachungsinformationsteilmenge,
Kombinieren der ersten und zweiten Überwachungsinformationsteilmengen zu einem kombinierten Überwachungsinformationssatz entsprechend Kommunikationsteilsystemen sowohl von der ersten als auch der zweiten Teilmenge von Kommunikationsteilsystemen;
Kommunizieren des kombinierten Überwachungsinformationssatzes; und
Erhalten des kombinierten Überwachungsinformationssatzes.

17. Verfahren zum Überwachen gemäß Anspruch 16, wobei der Schritt des Kombinierens in einer zweiten Teilnehmereinheit stattfindet und die erste Überwachungsinformationsteilmenge von der ersten Teilnehmereinheit zu der zweiten Kommunikationseinheit durch eine direkte drahtlose Verbindung von der ersten zu der zweiten Teilnehmereinheit kommuniziert wird.

18. Verfahren zum Überwachen gemäß Anspruch 16, wobei der Schritt des Kombinierens in einer zweiten Teilnehmereinheit stattfindet und die erste Überwachungsinformationsteilmenge von der ersten Teilnehmereinheit zu der zweiten Kommunikationseinheit durch ein Ad-hoc-Netzwerk mit kurzer Reichweite kommuniziert wird.

19. Verfahren zum Überwachen gemäß Anspruch 16, wobei der Schritt des Kombinierens in einer zweiten Teilnehmereinheit stattfindet und die erste Überwachungsinformationsteilmenge von der ersten Teilnehmereinheit zu der zweiten Kommunikationseinheit durch eine drahtlose Bluetooth-Verbindung kommuniziert wird.

20. Verfahren zum Überwachen gemäß Anspruch 16, wobei der Schritt eines Kombinierens der ersten und zweiten Überwachungsinformationsteilmenge zu einem kombinierten Überwachungsinformationssatz die folgenden Schritte umfasst:
Kommunizieren der ersten Überwachungsinformationsteilmenge von der ersten Teilnehmereinheit zu dem festen Netzwerk;
Kommunizieren der zweiten Überwachungsinformationsteilmenge von der ersten Teilnehmereinheit zu dem festen Netzwerk;
Kommunizieren der zweiten Überwachungsinformationsteilmenge von der zweiten Teilnehmereinheit zu dem festen Netzwerk;
Kombinieren der ersten und zweiten Überwachungsinformationsteilmenge zu einem kombinierten Überwachungsinformationssatz in dem festen Netzwerk; und
Kommunizieren des kombinierten Überwachungsinformationssatzes zu der ersten Teilnehmereinheit.

21. Verfahren zum Überwachen gemäß Anspruch 20, wobei der Schritt eines Kommunizieren des kombinierten Überwachungsinformationssatzes den Schritt eines Übertragens der kombinierten Überwachungsinformationsteilmenge zu einer Mehrzahl von Teilnehmereinheiten umfasst.

## Revendications

1. Système de communication sans fil (100) ayant une pluralité de sous-systèmes de communication desservant une pluralité d'unités d'abonné, **caractérisé en ce qu'**il comprend :
une première unité d'abonné (213) conçue pour surveiller un premier sous-ensemble de la pluralité de sous-systèmes de communication, et ainsi générer un premier sous-ensemble d'informations de surveillance concernant le premier sous-ensemble de systèmes de communication ;
une deuxième unité d'abonné (215) conçue pour surveiller un deuxième sous-ensemble de la pluralité de sous-systèmes de communication, différent du premier sous-ensemble de sous-systèmes de communication, et ainsi générer un deuxième sous-ensemble d'informations de surveillance concernant le deuxième sous-ensemble de systèmes de communication ; et
des moyens (301, 303, 305, 307, 211, 213, 215, 409, 501, 503, 505, 507) pour combiner le premier et le deuxième sous-ensembles d'informations de surveillance en un ensemble d'informations de surveillance combinées concernant les sous-systèmes de communication des deux premier et deuxième sous-ensembles de sous-systèmes de communication, comprenant des moyens conçus pour obtenir le premier et le deuxième sous-ensembles d'informations de surveillance et des moyens conçus pour communiquer l'ensemble d'informations de surveillance combinées,
les première et deuxième unités d'abonné comprenant des moyens pour communiquer avec les sous-systèmes de communication de leur propre sous-ensemble et au moins un sous-système de communication de l'autre sous-ensemble, des moyens pour communiquer leur sous-ensemble d'informations de surveillance généré, et des moyens pour obtenir l'ensemble d'informations de surveillance combinées.

2. Système de communication sans fil selon la revendication 1, dans lequel les moyens de combinaison sont situés dans la deuxième unité d'abonné (215) et le système de communication comprend des moyens (301, 303, 305, 307) pour communiquer le premier sous-ensemble d'informations de surveillance de la première unité d'abonné (213) à la deuxième unité d'abonné (215).

3. Système de communication sans fil selon la revendication 2, dans lequel les moyens pour communiquer le premier sous-ensemble d'informations de surveillance comprennent une liaison sans fil directe de la première (213) à la deuxième unité d'abonné (215).

4. Système de communication sans fil selon la revendication 2, dans lequel les moyens pour communiquer le premier sous-ensemble d'informations de surveillance comprennent un réseau ad hoc à courte portée.

5. Système de communication sans fil selon la revendication 2, dans lequel les moyens pour communiquer le premier sous-ensemble d'informations de surveillance comprennent une connexion sans fil Bluetooth.

6. Système de communication sans fil selon la revendication 1, dans lequel les moyens de combinaison (301, 303, 305, 307) sont situés sur un réseau fixe du système de communication et le système de communication comprend des moyens (205, 309) pour communiquer le premier sous-ensemble d'informations de surveillance de la première unité d'abonné (213) au réseau fixe (301) et des moyens (311, 203) pour communiquer le deuxième sous-ensemble d'informations de surveillance de la deuxième unité d'abonné (215) au réseau fixe (305) et des moyens pour communiquer (301, 205) l'ensemble d'informations de surveillance combinées à la première unité d'abonné.

7. Système de communication sans fil selon la revendication 6, comprenant en outre des moyens pour diffuser le sous-ensemble d'informations de surveillance combinées à une pluralité d'unités d'abonné (211, 213, 215).

8. Système de communication sans fil selon la revendication 7, dans lequel les moyens de diffusion sont conçus pour diffuser le sous-ensemble d'informations de surveillance combinées sur une pluralité de sous-systèmes de communication.

9. Système de communication sans fil selon l'une quelconque des revendications précédentes, dans lequel les premières et deuxièmes informations de surveillance comprennent des informations relatives à la localisation des première et deuxième unités d'abonné associées (213, 215) au moment où les informations de surveillance ont été générées.

10. Système de communication sans fil selon la revendication 1, dans lequel les premières et deuxièmes informations de surveillance comprennent des informations relatives à l'heure de la génération des informations de surveillance.

11. Système de communication sans fil selon la revendication 1, dans lequel chaque sous-système de communication comprend un sous-réseau fixe (301, 303, 305, 307) et dans lequel une pluralité de moyens de combinaison sont distribués entre les sous-réseaux fixes (301, 303, 305, 307).

12. Dispositif de communication sans fil pour un système de communication ayant une pluralité de sous-systèmes de communication desservant une pluralité d'unités d'abonné (211, 213, 215), **caractérisé en ce qu'**il comprend :
une première unité d'abonné (213) conçue pour surveiller un premier sous-ensemble (301) de la pluralité de sous-systèmes de communication, et ainsi générer un premier sous-ensemble d'informations de surveillance concernant le premier sous-ensemble de systèmes de communication, et comprenant des moyens pour communiquer avec le premier sous-ensemble de la pluralité de sous-systèmes de communication et au moins un sous-système de communication d'un deuxième sous-ensemble de la pluralité de sous-systèmes de communication ;
des moyens pour recevoir (203) un deuxième sous-ensemble d'informations de surveillance concernant le deuxièmes sous-ensemble (305) de systèmes de communication généré par une deuxième unité d'abonné (215) conçue pour surveiller le deuxième sous-ensemble (305) de la pluralité de sous-systèmes de communication, qui est différent du premier sous-ensemble (301) de sous-systèmes de communication ; et
des moyens (301, 303, 305, 307, 211, 213, 215, 409, 501, 503, 505, 507) pour combiner le premier et le deuxième sous-ensembles d'informations de surveillance en un ensemble d'informations de surveillance combinées concernant les sous-systèmes de communication des deux premier et deuxième sous-ensembles de sous-systèmes de communication ; et
des moyens pour communiquer l'ensemble d'informations de surveillance combinées aux autres unités d'abonné (211, 215).

13. Dispositif de communication sans fil selon la revendication 12, dans lequel les moyens (203) pour recevoir le deuxième sous-ensemble d'informations de surveillance permettent la réception du deuxième sous-ensemble d'informations de surveillance depuis une liaison sans fil directe de la deuxième (215) à la première unité d'abonné (213).

14. Dispositif de communication sans fil selon la revendication 12, dans lequel les moyens (203) pour recevoir le deuxième sous-ensemble d'informations de surveillance permettent la réception du deuxième sous-ensemble d'informations de surveillance depuis un réseau ad hoc à courte portée.

15. Dispositif de communication sans fil selon la revendication 12, dans lequel les moyens (203) pour recevoir le deuxième sous-ensemble d'ïnformations de surveillance permettent la réception du deuxième sous-ensemble d'informations de surveillante depuis une connexion Bluetooth.

16. Procédé de surveillance dans un système de communication sans fil ayant une pluralité de sous-systèmes de communication desservant une pluralité d'unités d'abonné, le procédé étant **caractérisé en ce qu'**il comprend les étapes consistant à :
surveiller, dans une première unité d'abonné, un premier sous-ensemble de la pluralité de sous-systèmes de communication, via une communication avec les sous-systèmes de communication du premier sous-ensemble et au moins un sous-système de communication d'un deuxième sous-ensemble des sous-systèmes de communication, et ainsi générer un premier sous-ensemble d'informations de surveillance concernant le premier sous-ensemble de systèmes de communication ;
surveiller, dans une deuxième unité d'abonné, le deuxième sous-ensemble de la pluralité de sous-systèmes de communication, qui est différent du premier sous-ensemble de sous-systèmes de communication, via une communication avec les sous-systèmes de communication du deuxième sous-ensemble et au moins un sous-système de communication du premier sous-ensemble des sous-systèmes de communication, et ainsi générer un deuxième sous-ensemble d'informations de surveillance concernant le deuxième sous-ensemble de systèmes de communication ; et
communiquer le premier et le deuxième sous-ensembles d'informations de surveillance générées ;
obtenir le premier et le deuxième sous-ensembles d'informations de surveillance ;
combiner le premier et le deuxième sous-ensembles d'informations de surveillance en un ensemble d'informations de surveillance combinées concernant les sous-systèmes de communication des deux premier et deuxième sous-ensembles de sous-systèmes de communication ;
communiquer l'ensemble d'informations de surveillance combinées ; et
obtenir l'ensemble d'informations de surveillance combinées.

17. Procédé de surveillance selon la revendication 16, dans lequel l'étape de combinaison a lieu dans la deuxième unité d'abonné et le premier sous-ensemble d'informations de surveillance est communiqué de la première unité d'abonné à la deuxième unité de communication via une liaison sans fil directe de la première à la deuxième unité d'abonné.

18. Procédé de surveillance selon la revendication 16, dans lequel l'étape de combinaison a lieu dans la deuxième unité d'abonné et le premier sous-ensemble d'informations de surveillance est communiqué de la première unité d'abonné à la deuxième unité de communication via un réseau ad hoc à courte portée.

19. Procédé de surveillance selon la revendication 16, dans lequel l'étape de combinaison a lieu dans la deuxième unité d'abonné et le premier sous-ensemble d'informations de surveillance est communiqué de la première unité d'abonné à la deuxième unité de communication via une connexion sans fil Bluetooth.

20. Procédé de surveillance selon la revendication 16, dans lequel l'étape de combinaison du premier et du deuxième sous-ensembles d'informations de surveillance en un ensemble d'informations de surveillance combinées comprend les étapes consistant à :
communiquer le premier sous-ensemble d'informations de surveillance de la première unité d'abonné à un réseau fixe ;
communiquer le deuxième sous-ensemble d'informations de surveillance de la deuxième unité d'abonné à un réseau fixe ;
combiner le premier et le deuxième sous-ensembles d'informations de surveillance en un ensemble d'informations de surveillance combinées sur le réseau fixe ; et
communiquer l'ensemble d'informations de surveillance combinées à la première unité d'abonné.

21. Procédé de surveillance selon la revendication 20, dans lequel l'étape de communication de l'ensemble d'informations de surveillance combinées comprend l'étape de diffusion du sous-ensemble d'informations de surveillance combinées à une pluralité d'unités d'abonné.
